# EUROPEAN PATENT SPECIFICATION

(11) **EP 4 494 125 B1**
(45) Date of publication and mention of the grant of the patent: **16.09.2026**
(21) Application number: 22716015.7
(22) Date of filing: 16.03.2022
(51) Int. Cl.: G08G 1/01, G08G 1/00, B60W 20/50, G07C 5/00, G07C 5/08, G08G 1/087, G08G 1/0967, B60W 50/029, B60W 50/02, G08G 1/16, B60W 60/00

(54) **A METHOD FOR ASSISTING IN THE OPERATION OF A MALFUNCTIONING AUTONOMOUS VEHICLE**
VERFAHREN ZUR UNTERSTÜTZUNG DES BETRIEBS EINES DEFEKTEN AUTONOMEN FAHRZEUGS
PROCÉDÉ D'AIDE AU FONCTIONNEMENT D'UN VÉHICULE AUTONOME DÉFAILLANT

(43) Date of publication of application: 22.01.2025
(73) Proprietor: Volvo Autonomous Solutions AB, 405 08 Göteborg (SE)
(72) Inventor: HAGVALL, Linus, 418 74 Göteborg (SE); BERGQUIST, Stefan, 417 27 Göteborg (SE)
(74) Representative: Valea AB
(86) International application number: PCT/EP2022/056862
(87) International publication number: WO 2023/174528

(56) References cited:
- WO-A1-2014/148976
- WO-A1-2021/126648
- US-A1- 2018 052 463
- US-A1- 2018 259 966
- US-A1- 2021 237 752

## Description

### TECHNICAL FIELD

The invention relates to a control unit and a method therein for assisting in the operation of a malfunctioning autonomous vehicle. The autonomous vehicle operates in a work environment which is shared with at least one manual actor.

The invention can be applied in heavy-duty vehicles, such as trucks, buses and construction equipment. Although the invention will be described with respect to an autonomous vehicle, the invention is also applicable to semi-autonomous vehicles.

### BACKGROUND

When designing and implementing an Autonomous Driving System (ADS), it is necessary to ensure that the system design is considered safe and can handle different types of issues that may arise. One of these issues relates to how to handle individual faults which occur in an autonomous vehicle during operation. When the autonomous vehicle operates in an area shared with manual actors, e.g., bicyclists, passenger vehicles, pedestrians etc., ensuring safety of the manual actors is the highest priority. Hence, a typical response to a fault of the operating autonomous vehicle is to perform an emergency stop. For example, if a pedestrian detector of the autonomous vehicle is faulty, it cannot be ensured that the autonomous vehicle will not collide with the manual actors. Hence, the autonomous vehicle needs to stop. Stopping the autonomous vehicle causes a productivity degradation since the autonomous vehicle cannot perform its assigned tasks and may further degrade productivity of other vehicle and the manual actors. Hence, there is an ongoing strive to mitigate the reduction of productivity when faults occur in autonomous vehicles.

### SUMMARY

An object of the invention is to provide a method for more efficiently handle malfunctioning autonomous vehicles according to claim 1.

When deciding on a preventive action based on a specific fault, it is possible to dynamically decide which preventive action(s) to trigger to have the most productive outcome for the work environment. Regardless of the option(s) decided to trigger, the autonomous vehicle is able to continue to perform operations in a manner which is safe for the at least one manual actor. When triggering the autonomous vehicle to refrain from traversing and/or operating in the at least one area, the autonomous vehicle may instead perform operations elsewhere, as other areas may still be safe for the malfunctioning autonomous vehicle to operate and/or traverse. When triggering to increase safety requirements for traversing and/or operating in the at least one area, the autonomous vehicle may continue to operate in and/or traverse the at least one area as the increase in safety requirements ensures safety of the at least one manual actor. When triggering the adaption of road infrastructure in the at least one area, the at least one manual actor is prompted to be restricted in its movement such that the manual actor is not in danger when the malfunctioning autonomous vehicle operates in, and/or traverses the at least one area.

According to a second aspect, there is provided a control unit configured to perform the method according to the first aspect.

According to a third aspect, there is provided an autonomous vehicle comprising the control unit according to the second aspect. The autonomous vehicle may e.g., be a truck, a passenger car, or any other suitable autonomous vehicle.

According to a fourth aspect, there is provided a control station comprising the control unit according to the second aspect. The control station may be remote, e.g., a server in a cloud environment, or may be local, e.g., comprised in the work environment.

According to a fifth aspect, there is provided a computer program comprising program code means for performing the method according to the first aspect, when said program is run on a computer.

According to a sixth aspect, there is provided a computer program medium carrying a computer program comprising program code means for performing the method according to the first aspect, when said program is run on a computer.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
- Fig. 1: is a schematic overview of a work environment according to embodiments herein.
- Fig. 2: is a flowchart illustrating a method according to embodiments herein.
- Fig. 3: is a schematic block diagram illustrating an example scenario according to embodiments herein.
- Figs. 4a-4b: are schematic block diagrams illustrating a control unit according to embodiments herein.

### DETAILED DESCRIPTION OF EXAMPLE EMBODIMENTS OF THE INVENTION

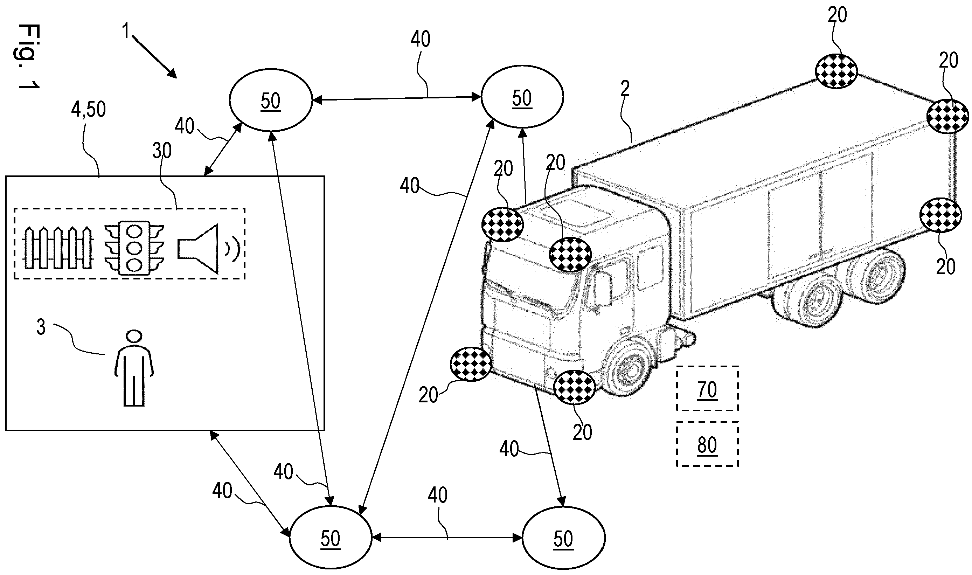

**Fig. 1****.** is a schematic illustration of a **work environment 1** in accordance with embodiments herein. The work environment 1 may be a constructions site, warehouse, and/or any other environment in which autonomous vehicles may operate.

In the work environment 1, an **autonomous vehicle 2** operate. The autonomous vehicle 2 may be any type of autonomous or semi-autonomous vehicle, such as e.g., any one of a car, truck, bus, or heavy-duty vehicle such as a bulldozer, loader, dump truck, or crane vehicle.

The autonomous vehicle 2 may be configured to perform a one or more operations, e.g. tasks or missions at least partially performed by operating in, and/or by traversing areas of the work environment 1. For example, the autonomous vehicle 2 may be configured to perform the one or more operations in a **set of areas 50.** An example area in the set of areas 50 may be located in, or in connection to, a warehouse, dock, quarry, and/or a loading bay. Each area in the set of areas 50 may be associated with at least one specific operation that may be performed by the autonomous vehicle 2. The one or more operations may comprise any suitable operation for an autonomous or semi-autonomous vehicle. For example, the one or more operations may comprise loading and/or unloading goods/objects, and/or traversing one or more areas in the set of areas 50, e.g. for transporting one or more objects between areas in the set of areas 50. The one or more operations may additionally or alternatively comprise any operation(s) relating to normal traffic operations, e.g., to safely traverse a crossing, to avoid obstacles in a road, charging and/or refuelling, parking, handover to/from manual operation or any driving operation. The one or more operations may depend on a type of the autonomous vehicle 2, e.g. based on capabilities of the autonomous vehicle 2.

To travel between the set of areas 50, the autonomous vehicle 2 may be configured with a **set of routes 40.** The set of routes 40 and the set of areas 50 may be part of a map obtained by the autonomous vehicle 2, e.g. stored locally or on some remote server.

The autonomous vehicle 2 may comprise a **set of sensors 20.** The set of sensors 20 may be needed by the autonomous vehicle 2 to perform the one or more operations in the set of areas 50 and/or to travel on the set of routes 40. When one or more sensors in the set of sensors 20 malfunction, a fault may occur in the autonomous vehicle 2. The fault may mean that some of the one or more operations cannot be performed by the autonomous vehicle 2, at least not in the same manner as operating without the occurred fault.

The work environment 1 comprises **at least one area 4** in the set of areas 50. **At least one manual actor 3** is arranged to operate in and/or traverse the at least one area 4, e.g. in a regular and/or periodic manner. In other words, the at least one area 4 may be an area in the work environment 1 wherein humans may be present. The other areas in the set of areas 50 may be isolated from manual actors. The autonomous vehicle 2 may concurrently need to traverse and/or operate in the at least one area 4, e.g. to perform any of the one or more operations. The at least one manual actor 3 may comprise any one or more out of: at least one pedestrian, at least one bicyclist, at least one VRU, e.g. a passenger vehicle such as a car, truck, motorcycle or bus. In other words, the at least one manual actor 3, may in some form comprise at least one human, e.g. driving or riding a bike or car, walking in the at least one area 4, etc. The at least one manual actor 3 may operate in the at least one area 4 by performing any suitable operation, e.g. work related. The operation performed by the at least one manual actor 3 may for example comprise crossing a road to reach a destination, performing repairs and/or construction and/or merely being idle in the at least one area 4.

The at least one area 4, may be arranged with **road infrastructure 30.** The road infrastructure 30 may be capable of restricting the movement of the at least one manual actor 3. The road infrastructure 30 may restrict the at least one manual actor 3 from operating in, and/or traversing the at least one area 4, and/or for performing certain operations in the at least one area 4, e.g. crossing a road. The road infrastructure 30 may be capable of restricting the movement of the at least one manual actor 3 in any suitable manner. For example, the road infrastructure 30 may comprise a fence and/or barrier for restricting entering the at least one area 4 and/or for restricting crossing a road in the at least one area 4. The road infrastructure 30 may be capable of closing the fence and/or barrier and thus restricting the movement of the at least one manual actor 3. Additionally, or alternatively, the road infrastructure 30 may comprise one or more traffic lights which may be used for controlling where the at least one manual actor 3 is allowed to go. Furthermore, the road infrastructure may comprise one or more alerting units which may be capable of triggering alert signals which indicate a movement restriction to the at least one manual actor 3.

Embodiments herein may be performed by a **control unit 70.** The control unit 70 may be comprised in the autonomous vehicle 2 but may also be comprised in any other suitable location such as e.g., in a **control station 80** at a remote location. The control unit 70 may be communicatively coupled to the control station 80 and/or the autonomous vehicle 2. The control unit 70 may also be communicatively coupled with the set of sensors 20 and/or the road infrastructure 30. Additionally or alternatively, the control unit 70 may be part of, or communicatively coupled with any other control unit capable of controlling the autonomous vehicle 2 and/or the road infrastructure 30.

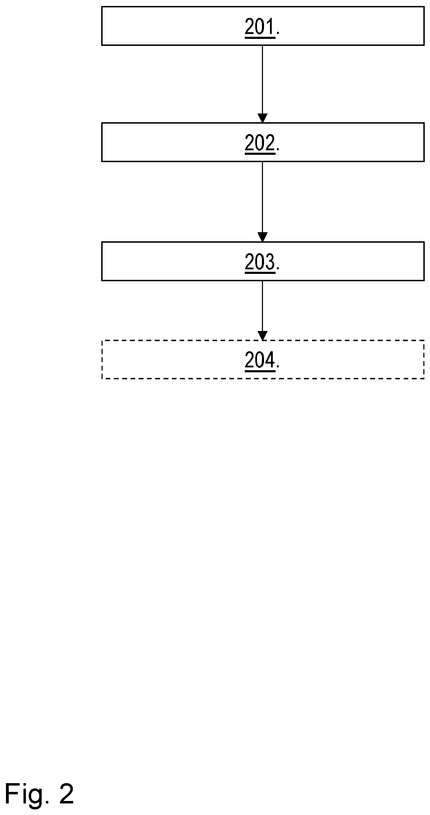

**Fig. 2** illustrates a method for assisting in the operation of the autonomous vehicle 2 in the work environment 1 according to embodiments herein. The autonomous vehicle 2 is malfunctioning, e.g. any one or more out of the sensors in the set of sensors 20 may have failed. The work environment 1 comprises the at least one area 4. The at least one manual actor 3 operates in the at least one area 4 and/or traverses the at least one area 4. The at least one manual actor 3 may comprise any one or more out of: at least one VRU, e.g. at least one pedestrian and/or cyclists, and at least one passenger vehicle. The method comprises the following actions described below, which actions may be taken in any suitable order. Optional actions are indicated by dashed boxes in Fig. 2.

### Action 201

The method comprises obtaining diagnostics data indicative of a malfunction in the autonomous vehicle 2. The diagnostics data may be any type of data which may indicate that the autonomous vehicle 2 is malfunctioning. For example, the diagnostics data may comprise sensor data from the set of sensors 20. Additionally or alternatively, the diagnostics data may comprise self-diagnosis information from one or more sensor in the set of sensors.

In some embodiments obtaining the diagnostics data further comprises receiving the diagnostics data from the autonomous vehicle 2 and/or from one or more external entities observing the autonomous vehicle 2. The external entities may observe one or more problems with the autonomous vehicle 2 which indicates a certain type of malfunction. For example, the one or more external entities may measure and/or detect that the autonomous vehicle 2 drives faster than expected and/or intended in a certain route or area.

In some embodiments the one or more external entities comprises at least one additional autonomous vehicle.

In these embodiments, the at least one additional autonomous vehicle and the autonomous vehicle 2 may be configured to share data about detected dynamic objects with each other. When the at least one additional autonomous vehicle detects an unreported dynamic objects which the autonomous vehicle 2 recently has driven passed, then this may indicate that the autonomous vehicle 2 is malfunctioning. The at least one additional autonomous vehicle may then signal to the autonomous vehicle 2 and/or the control unit 70 that the autonomous vehicle 2 is malfunctioning.

In other words, diagnosis of the autonomous vehicle 2 may be performed by centralized collaborative monitoring, e.g. by external entities, and/or by self-diagnostics in the autonomous vehicle 2.

In some embodiments the diagnostics data indicates one or more failing sensors in the set of sensors of the autonomous vehicle 2. For example, one or more sensors in the set of sensors 20 may fail to report any sensor data which thus indicates a malfunction. Additionally or alternatively, two sensors in the set of sensors 20 may be used for redundancy, and wherein the sensors are reporting different data. Hence, at least one of them is likely broken. Additionally or alternatively, the diagnostics data may indicate the malfunction by indicating that at least one sensor in the set of sensors 20 switch between states, e.g. object detected, and object not detected, faster than an acceptable/allowed switching boundary.

In some embodiments the diagnostics data indicates a failing speedometer and/or failing pedestrian detector. While these are two examples, many other diagnostic data indicative of a malfunction are also possible. For example, the diagnostics data may relate to faults in a perception system of the autonomous vehicle 2, but may also relate to faults in motion control components such as e.g. detecting a defective suspension.

### Action 202

The method comprises, based on the diagnostics data, determining a fault associated with the autonomous vehicle 2.

Based on the determined fault, it may be possible to determine that safety requirements need to be increased for the autonomous vehicle 2 to safely operate in and/or traverse the at least one area 4, e.g. a maximum allowed speed for the autonomous vehicle 2 may need to be reduced. It may also be possible to determine whether it is necessary to separate the autonomous vehicle 2 from the at least one manual actor 3 by other means.

Determining the fault may comprise determining whether or not it is possible to operate the autonomous vehicle 2, i.e. whether the autonomous vehicle 2 have essential driving capabilities. Determining whether or not it is possible to operate the autonomous vehicle 2 may further comprise determining whether or not it is safe to operate in and/or traverse the at least on area 4 using normal safety requirements.

The determined fault may further be associated with a set of capabilities for the autonomous vehicle 2. The set of capabilities may indicate what operations the autonomous vehicle 2 is capable of when operating with the determined fault. The set of capabilities may for example indicate any one or more out of: a maximum allowed speed and/or acceleration for the autonomous vehicle 2, one or more available sensors for the autonomous vehicle 2 to use, one or more available systems for the autonomous vehicle 2 to use, e.g. braking systems and/or pedestrian detection systems, available traffic operations for the autonomous vehicle 2 to perform, e.g. left and/or right turns, and/or other functionalities of the autonomous vehicle 2. The set of capabilities may also indicate operations which the autonomous vehicle cannot perform, when operating with the determined fault. In some embodiments, the set of capabilities may e.g. indicate an allowed maximum speed for the autonomous vehicle 2 to drive while also being able to detect pedestrians within a predefined time period. Another example is that the determined fault in certain sensors of the set of sensors 20 may affect a tracking performance of the autonomous vehicle 2 when following a route in the set of routes 40. Thus the set of capabilities may indicate tracking performance of the autonomous vehicle 2. When the tracking performance is low, the autonomous vehicle 2 may need a corresponding margin for how wide roads/lanes the autonomous vehicle 2 can safely operate in, e.g. as it may sway from the path based on the tracking performance. The set of capabilities may be determined by means of mapping the fault and/or diagnostics data to a lookup table or database.

In some embodiments, determining the fault comprises mapping the diagnostics data to one or more faults. In this way, the fault may be immediately mapped from the diagnostics data. In some embodiments, mapping the diagnostics data to one or more fault is further based on a predetermined analysis of how different failures of the set of sensors affect operations of the autonomous vehicle 2. For example, when the diagnostics data indicate that a combination of sensors have failed, the predetermined analysis may indicate which fault is associated with the diagnostics data. In some embodiments, mapping the diagnostics data to one or more fault is further based on a predetermined analysis of how different failures of the set of sensors affect operations within and/or when traversing the at least one area 4.

### Action 203

The method comprises deciding a preventive action between a set of preventive actions for securing the at least one area 4 based on the determined fault. The decision may further be based on the set of capabilities associated with the determined fault. The set of preventive actions comprises the following actions:
- triggering the autonomous vehicle 2 to refrain from traversing and/or operating in the at least one area 4, or to increase safety requirements for traversing and/or operating in the at least one area 4,
- triggering an adaption of the road infrastructure 30 in the at least one area 4. The adaption prompts a restriction of movement of the at least one manual actor 3 in the at least one area 4.
- A combination thereof is also possible, i.e. a combination of both above-mentioned options.

In other words, deciding the preventive action comprises considering the above actions. This ensures that it is possible to operate the autonomous vehicle 2 in a safe manner, even though it is malfunctioning, thereby improving productivity and maintaining safety.

The decision of which preventive action to trigger is based on the fault, e.g. a type of the fault. The decision may e.g. comprise mapping the determined fault to a preventive action, e.g. by means of a database or lookup table.

In some embodiments, deciding the preventive action comprises deciding to trigger the adaption of the road infrastructure 30 in the at least one area 4. For example, the adaption of the road infrastructure 30 in the at least one area 4 may be a default preventive action. In these embodiments, deciding the action may comprise immediately triggering the adaption of the road infrastructure 30.

According to the claimed invention, triggering the adaption of the road infrastructure 30 comprises :
- closing a restriction member, such as a fence and/or barrier, for entering and/or exiting the at least one area 4, e.g. such that the at least one manual actor 3 cannot enter the at least one area 4 at the same time as the autonomous vehicle 2, the adaptation may further include:
- adjusting traffic lights and/or traffic signs of the at least one area 4, e.g. such that the at least one manual actor 3 is restricted from crossing a road when the autonomous vehicle 2 operates in and/or traverses the at least one area 4,
- issuing an alert signal, e.g. such that the at least one manual actor 3 is alerted of that the autonomous vehicle 2 is to operate in and/or traverse the at least one area 4.

In some embodiments, the alert signal comprises any one or more out of:
- a sound alert signal, e.g. a warning sound,
- a light alert signal, e.g. a warning light, and
- a displaying warning message on a display in the at least one area 4, e.g., displayed on a sign and/or sent to a wireless device of the at least one manual actor 3, such as a smart phone or wearable device.

According to the claimed invention, triggering the autonomous vehicle 2 to refrain from traversing and/or operating in the at least one area 4 further comprises any one or more out of:
- re-routing the autonomous vehicle 2, and
- refraining from performing at least one operation, wherein the at least one operation requires the traversal and/or operation in the at least one area 4.

For example, it may be possible to refrain from performing the at least on operation at all, and instead perform other operations. The at least one operation may then be deferred until the autonomous vehicle 2 has been repaired. In some embodiments it may be possible to use other routes in the set of routes 40 to perform the operations, i.e. without traversing the at least one area 4.

In some embodiments, triggering the autonomous vehicle 2 to increase safety requirements for traversing and/or operating in the at least one area 4, further comprises:
- reducing a maximum speed and/or acceleration allowed for the autonomous vehicle 2 in the at least one area 4.

For example, the problem may be associated with a faulty pedestrian detection system such that the pedestrian detection system can only safely detect pedestrian at a low speed, and thereby causing a danger when the autonomous vehicle 4 drives at a too high speed in the at least one area 4.

In some embodiments, deciding the preventive action between the set of preventive actions further comprises:
- evaluating a productivity for each of the preventive actions in the set of preventive actions, and
- deciding the preventive action with the highest evaluated productivity.

In some embodiments, deciding the preventive action may further be based on the associated set of capabilities of the determined fault.

Estimating the productivity for each of the preventive actions may be based on the determined fault, and may be dependent on the work environment 1 and/or the at least one area 4.

In some example scenarios, the at least one manual actor 3 is a pedestrian which wants to cross a road in the at least one area 4 since it is the fastest route, but there actually is a tunnel a bit further away which is also an acceptable route. In these example scenarios it may be more productive to let the autonomous vehicle 2 operate in the at least one area 4 and adapt the road infrastructure 30 such that the pedestrian will instead have to take the tunnel.

However, if there are no alternative acceptable route for the pedestrian, and they need to get to a location e.g. to assist in loading/unloading, it may be more productive to increase safety requirements of the autonomous vehicle 2 and/or re-route the autonomous vehicle

Additionally or alternatively, estimating the productivity for each of the preventive actions may depend on a vehicle type of the autonomous vehicle 2 and/or the type of road infrastructure 30 in the at least one area 4. For example, depending on the type of road infrastructure 30, restricting movement in the at least one area 4 may be slow, i.e. time to close a fence or barrier, and may therefore reduce productivity more than re-routing the autonomous vehicle 2.

### Action 204

The method may further comprise triggering the decided preventive action. Triggering the preventive actions may be performed in any suitable manner.

The methods will now be further explained and exemplified in below embodiments. These below embodiments may be combined with any suitable embodiment as described above.

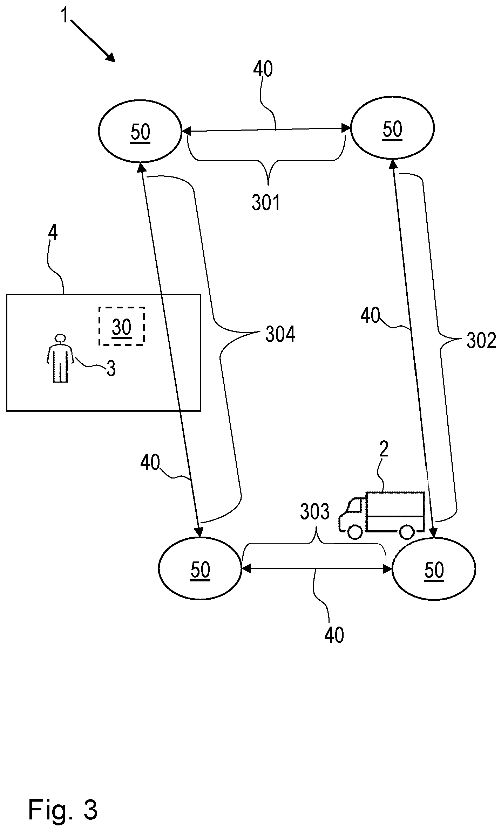

Fig 3. illustrates an example scenario of embodiments herein. The example scenario may be performed by the control unit 70 in the control station 80 and/or in the autonomous vehicle 2. In the example scenario, the autonomous vehicle 2 performs a set of operations by travelling between the set of areas 50, including the at least one area 4, by using the set of routes 40. Each of the set of routes 40 is associated with a respective operation in the set of operations, also referred to as missions. The set of operations comprises a **first operation 301, a second operation 302, a third operation 303, and a fourth operation 304.** The fourth operation 304 is associated with a route which traverses the at least one area 4. The control unit 70 obtains diagnostics data, e.g. as in action 201. The diagnostics data may indicate that there is a fault with a camera-based pedestrian detection system of the autonomous vehicle 2. Only the at least one area 4 may have manual actors present, and hence, the autonomous vehicle 2 may still operate in the rest of the set of areas 50 without the use of the pedestrian detection system. The autonomous vehicle 2 may thus proceed with the operations in the set of operations which can be performed in isolation from the at least one manual actor 3. Thus, for the first, second, and third operation 301, 302, 303, the autonomous vehicle 2 may perform the operations as long as the autonomous vehicle 2 does not traverse the at least one area 4. This may cause a need for re-routing the autonomous vehicle 2, e.g. such that it needs to go a longer distance to perform its operations. To perform the fourth operation 304, the autonomous vehicle 2 may need to operate in and/or traverse the at least one area 4. Since the pedestrian detection system is faulty, the autonomous vehicle 2 cannot operate in, and/or traverse the at least one area 4 by using standard safety requirements and/or configurations of the autonomous vehicle 2. To perform the fourth operation 304 there are thus two major options to consider, e.g. as when deciding the preventive actions in action 203 above:
1) to perform the fourth operation 304 by triggering an adaption of the road infrastructure 30 to restrict a movement of the at least one manual actor 30, e.g. by closing a gate to the at least one area 4,
2) to trigger an increase of the safety requirement of the autonomous vehicle, e.g. as it may be possible to drive in the at least one area 4 for some circumstance of faulty pedestrian detection systems. For example, the pedestrian detection system may be faulty such that pedestrians can only be detected very close to the autonomous vehicle 2. In these embodiments it may be possible to estimate a maximum safe speed of the autonomous vehicle 2 which still allows the autonomous vehicle 2 to be able to detect pedestrians in time, and further to reduce the maximum allowed speed allowed by the autonomous vehicle 2 to be lower than or equal to the estimated maximum safe speed.

### Preventive action

In some embodiments herein, the set of preventive actions, e.g. as in action 203 may further comprise triggering any one or more out of:
- that the at least one manual actor 3 is not allowed to cross a road of the at least one area 4 while the autonomous vehicle 2 is within a predetermined number of meters, this may e.g. be realized by restricting the movement of the at least one manual actor as in action 203.
- that the at least one manual actor 3 is not allowed to leave its vehicle or are limited to use vehicles which fulfil a certain safety level and/or safety requirement.
- that the at least one manual actor 3 is limited to a predetermined speed and/or a predetermined traffic behaviour, e.g. no left turns. This may ensure that the autonomous vehicle 2 and the at least one manual actor may not be able to collide. This is since the autonomous vehicle 2 may also concurrently be configured with a complementing traffic behaviour causing this effect.
- that the at least one manual actor 3 is not allowed to approach the autonomous vehicle 2 while the autonomous vehicle 2 is turned on. This may be realized by e.g. light signalling on the autonomous vehicle 2 or road infrastructure 30. Another example could be communication to a wireless device of the at least one manual actor 3. In some embodiments, current restrictions are displayed on a display of the road infrastructure 30 at the entrance to the at least one area 4 e.g. which displays a message "do not enter", "keep distance to vehicles", or "stay off road", etc..

Each of the preventive actions make it possible to continue operation with some level of productivity in the work environment 1 for the rest of the day/shift and any necessary troubleshooting and maintenance may thus be deferred until after operations of the autonomous vehicle 2 is completed. In some embodiments, the preventive actions may be decided based on current capabilities of the autonomous vehicle 2. The current capabilities may be determined based on the determined fault.

### Offline analysis and online

Some actions of the embodiments herein may be performed while the autonomous vehicle 2 performs the one or more operations in the work environment 1. This may be referred to as an online part of embodiments herein. The online part may comprise the following steps:
- diagnosing sensor(s), e.g. as in actions 201, and 202 above,
- adapt to the limited capabilities, e.g. as in actions 203, and 204 above.

There may be different options of preventive actions, e.g. one that affect the autonomous vehicle's 2 operations, and one that adapts the road infrastructure 30 of the at least one area 4.

Some actions of the embodiments herein, in particular with respect to analysis of faults and their capabilities, may be performed at a remote location, and/or at any suitable earlier point in time before performing the one or more operations. These actions may be referred to as an offline part of embodiments herein. The offline part may evaluate the autonomous vehicle's 2 capabilities given specific sensor failures and how these may affect possible operations, missions, and/or the work environment 1. The offline part may comprise evaluating what effect a specific sensor failure has on an operational domain capability of the work environment 1 and/or the autonomous vehicle 2. The effect is analysed for how it affects the operations of the autonomous vehicle 2 and how it effects the at least one area 4 with respect to productivity of the autonomous vehicle 2 and/or the at least one manual actor 3.

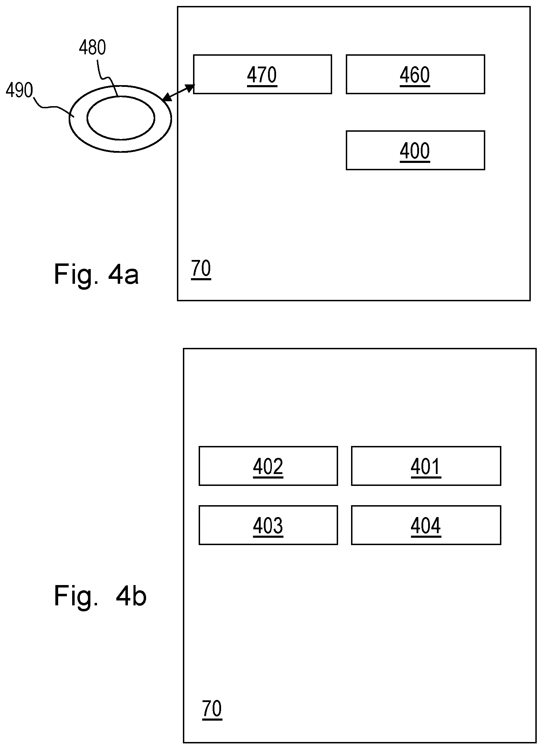

To perform the embodiments described herein, the control unit 70 may be configured to perform any one or more of the above actions 201-204 or any of the other examples or embodiments herein. The control unit 70 may for example comprise an arrangement depicted in **Figs. 4a and 4b****.**

The control unit 70 may comprise an **input and output interface 400** configured to communicate any necessary components or entities of embodiments herein. The input and output interface 400 may comprise a wireless and/or wired receiver (not shown) and a wireless and/or wired transmitter (not shown). The control unit 70 may be arranged in any suitable location of the autonomous vehicle 2 and/or in the control station 80.

The control unit 70 may further be configured to, e.g. by means of an **obtaining unit 401** in the control unit 70, obtain diagnostics data indicative of a malfunction in the autonomous vehicle 2, e.g., as in action 201 above.

The control unit 70 may further be configured to, e.g. by means of a **determining unit 402** in the control unit 70, based on the diagnostics data, determine a fault associated with the autonomous vehicle 2, e.g. as in action 202 above.

The control unit 70 may further be configured to, e.g. by means of a **deciding unit 403** in the control unit 70, based on the determined fault, decide a preventive action between a set of preventive actions for securing the at least one area 4, e.g., as in action 203 above.

The control unit 70 may further be configured to, e.g. by means of the **triggering unit 404** in the control unit 70, trigger the decided preventive action, e.g. as in action 204 above.

The embodiments herein may be implemented through a processor or one or more processors, such as a **processor 460** of a processing circuitry in the control unit 70 depicted in Fig. 4a, together with computer program code for performing the functions and actions of the embodiments herein. The program code mentioned above may also be provided as a computer program medium, for instance in the form of a data computer readable medium carrying computer program code for performing the embodiments herein when being loaded into the control unit 70. One such computer readable medium may be in the form of a memory stick. The computer program code may furthermore be provided as pure program code on a server and downloaded to the control unit 70.

The control unit 70 may further comprise a **memory 470** comprising one or more memory units. The memory 470 comprises instructions executable by the processor in the control unit 70. The memory 470 is arranged to be used to store e.g. information, indications, data, configurations, trajectories, positions, region of interests, sensor data, and applications to perform the methods herein when being executed in the control unit 70.

In some embodiments, a **computer program 480** comprises instructions, which when executed by a computer, e.g. the at least one processor 460, cause the at least one processor of the control unit 70 to perform the actions 201-204 above.

In some embodiments, a **computer-readable storage medium 490** comprises the respective computer program 480. The computer-readable storage medium 490 may comprise program code for performing the steps of any one of actions 201-204 above when said program product is run on a computer, e.g. the at least one processor 460.

Those skilled in the art will appreciate that the units in the control unit 70 described above may refer to a combination of analogue and digital circuits, and/or one or more processors configured with software and/or firmware, e.g. stored in the control unit 70, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

It is to be understood that the present invention is not limited to the embodiments described above and illustrated in the drawings; rather, the skilled person will recognize that many changes and modifications may be made within the scope of the appended claims.

## Claims

1. A method for assisting in the operation of a malfunctioning autonomous vehicle (2) in a work environment (1), wherein the work environment (1) comprises a set of areas (50), wherein the set of areas (50) comprise at least one area (4), wherein the at least one area (4) comprises a road, and wherein at least one manual actor (3) operates in the at least one area (4) and/or traverses the at least one area (4), and wherein the other areas in the set of areas (50), other than the at least one area (4), are isolated from manual actors, and wherein the autonomous vehicle (2) is configured with a set of routes (40) for travelling between areas in the set of areas (50) , the method comprising:
- obtaining (201) diagnostics data indicative of a malfunction in the autonomous vehicle (2),
- based on the diagnostics data, determining (202) a fault associated with the autonomous vehicle (2),
- based on the determined fault, deciding (203) and triggering (204) a preventive action between a set of preventive actions for securing the at least one area (4), the set of preventive actions comprising:
- triggering the autonomous vehicle (2) to refrain from traversing and/or operating in the at least one area (4),
- triggering an adaption of road infrastructure (30) in the at least one area (4), which adaption prompts a restriction of movement of the at least one manual actor (3) in the at least one area (4), or
- a combination thereof;
***characterized in that***
triggering the autonomous vehicle (2) to refrain from traversing and/or operating in the at least one area (4) comprises re-routing the autonomous vehicle (2) such that it needs to go a longer distance to perform operations by using other routes in the set of routes (40) to perform the operations without traversing the at least one area (4), and
triggering the adaption of the road infrastructure (30) comprises closing a restriction member, such as a fence and/or barrier, for restricting the manual actor (3) from entering or exiting the at least one area (4)).

2. The method according to any one of the preceding claims, wherein deciding (203) the preventive action comprises deciding to trigger the adaption of the road infrastructure (30) in the at least one area (4).

3. The method according to any one of the preceding claims, wherein triggering the autonomous vehicle (2) to refrain from traversing and/or operating in the at least one area(4) further comprises refraining from performing at least one operation, wherein the at least one operation requires the traversal and/or operation in the at least one area (4), and/or wherein triggering the adaption of the road infrastructure (30) comprises any one or more out of adjusting traffic lights and/or traffic signs of the at least one area (4) such that the at least one manual actor (3) is restricted from crossing a road when the autonomous vehicle(2) operates in and/or traverses the at least one area (4), and issuing an alert signal such that the at least one manual actor (3) is alerted of that the autonomous vehicle (2) is to operate in and/or traverse the at least one area (4).

4. The method according to claim 3, wherein the alert signal comprises any one or more out of: - a sound alert signal, - a light alert signal, and - a displaying warning message on a display in the at least one area (4).

5. The method according to any one of the preceding claims, wherein obtaining (201) the diagnostics data further comprises receiving the diagnostics data from the autonomous vehicle (2) and/or from one or more external entities observing the autonomous vehicle (2).

6. The method according to claim 5, wherein the one or more external entities comprises at least one additional autonomous vehicle (2).

7. The method according to any one of the preceding claims, wherein the diagnostics data indicates at least one of:
- one or more failing sensors in a set of sensors of the autonomous vehicle (2), and
- a failing speedometer and/or failing pedestrian detector.

8. The method according to any one of the preceding claims, wherein determining (202) the fault comprises mapping the diagnostics data to one or more faults.

9. The method according to claim 8, wherein mapping the diagnostics data to one or more fault is further based on at least one of:
- a predetermined analysis of how different failures of the set of sensors affect operations of the autonomous vehicle (2), and
- a predetermined analysis of how different failures of the set of sensors affect operations within and/or when traversing the at least one area (4).

10. The method according to any one of the preceding claims, wherein the at least one manual actor (3) comprises any one or more out of:
at least one Vulnerable Road User, VRU, e.g. at least one pedestrian and/or cyclists, and
at least one passenger vehicle.

11. A control unit (70) configured to perform the method according to any one of claims 1-10.

12. An autonomous vehicle (2) comprising a control unit (70) according to claim 11.

13. A computer program (480) comprising program code means for performing the steps of any one of claims 1-10 when said program is run on a computer.

14. A computer program medium (490) carrying a computer program comprising program code means for performing the steps of any one of claims 1-10 when said program is run on a computer.

## Patentansprüche

1. Verfahren zum Unterstützen bei dem Betrieb eines fehlfunktionierenden autonomen Fahrzeugs (2) in einer Arbeitsumgebung (1), wobei die Arbeitsumgebung (1) einen Satz von Bereichen (50) umfasst, wobei der Satz von Bereichen (50) mindestens einen Bereich (4) umfasst, wobei der mindestens eine Bereich (4) eine Straße umfasst, und wobei mindestens ein manueller Akteur (3) in dem mindestens einen Bereich (4) agiert und/oder den mindestens einen Bereich (4) durchquert, und wobei die anderen Bereiche in dem Satz von Bereichen (50), außer dem mindestens einen Bereich (4), von manuellen Akteuren isoliert sind, und wobei das autonome Fahrzeug (2) mit einem Satz von Routen (40) zum Fahren zwischen Bereichen in dem Satz von Bereichen (50) konfiguriert ist, das Verfahren umfassend:
- Erhalten (201) von Diagnosedaten, die eine Fehlfunktion in dem autonomen Fahrzeug (2) angeben,
- basierend auf den Diagnosedaten, Bestimmen (202) eines Fehlers, der dem autonomen Fahrzeug (2) zugeordnet ist,
- basierend auf dem bestimmten Fehler, Entscheiden (203) und Auslösen (204) einer Präventivmaßnahme aus einer Menge von Präventivmaßnahmen zum Sichern des mindestens einen Bereichs (4), der Satz von Präventivmaßnahmen umfassend:
- Auslösen, dass das autonome Fahrzeug (2) von dem Durchqueren und/oder Agieren in dem mindestens einen Bereich (4) absieht,
- Auslösen einer Anpassung von Straßeninfrastruktur (30) in dem mindestens einen Bereich (4), wobei die Anpassung eine Beschränkung von Bewegung des mindestens einen manuellen Akteurs (3) in dem mindestens einen Bereich (4) veranlasst, oder
- eine Kombination davon;
**dadurch gekennzeichnet, dass**
das Auslösen, dass das autonome Fahrzeug (2) von dem Durchqueren und/oder Agieren in dem mindestens einen Bereich (4) absieht, ein derartiges Umleiten des autonomen Fahrzeugs (2) umfasst, dass es eine längere Strecke zurücklegen muss, um Betriebe durchzuführen, durch Verwenden anderer Routen in dem Satz von Routen (40), um die Betriebe durchzuführen, ohne den mindestens einen Bereich (4) zu durchqueren, und
das Auslösen der Anpassung der Straßeninfrastruktur (30) ein Schließen eines Beschränkungselements, wie eines Zauns und/oder einer Sperre, umfasst, um den manuellen Akteur (3) zu beschränken, den mindestens einen Bereich (4) zu betreten oder zu verlassen.

2. Verfahren nach einem der vorstehenden Ansprüche, wobei ein Entscheiden (203) über die Präventivmaßnahme umfasst, zu entscheiden, die Anpassung der Straßeninfrastruktur (30) in dem mindestens einen Bereich (4) auszulösen.

3. Verfahren nach einem der vorstehenden Ansprüche, wobei das Auslösen, dass das autonome Fahrzeug (2) von dem Durchqueren und/oder Agieren in dem mindestens einen Bereich (4) absieht, ferner das Absehen von dem Durchführen mindestens eines Betriebs umfasst, wobei der mindestens eine Betrieb das Durchqueren und/oder Agieren in dem mindestens einen Bereich (4) erfordert, und/oder wobei das Auslösen der Anpassung der Straßeninfrastruktur (30) ein beliebiges oder mehrere umfasst von dem derartigen Anpassen von Ampeln und/oder Verkehrszeichen des mindestens einen Bereichs (4), dass der mindestens eine manuelle Akteur (3) beschränkt wird, eine Straße zu überqueren, wenn das autonome Fahrzeug (2) in dem mindestens einen Bereich (4) agiert und/oder diesen durchquert, und einem derartigen Ausgeben eines Warnsignals, dass der mindestens eine manuelle Akteur (3) darauf aufmerksam gemacht wird, dass das autonome Fahrzeug (2) in dem mindestens einen Bereich (4) agieren wird und/oder diesen durchquert.

4. Verfahren nach Anspruch 3, wobei das Warnsignal ein beliebiges oder mehrere umfasst von:
- einem akustischen Warnsignal, - einem optischen Warnsignal, und - einer angezeigten Warnmeldung auf einer Anzeige in dem mindestens einen Bereich (4).

5. Verfahren nach einem der vorstehenden Ansprüche, wobei das Erhalten (201) der Diagnosedaten ferner das Empfangen der Diagnosedaten von dem autonomen Fahrzeug (2) und/oder von einer oder mehreren externen Einheiten, die das autonome Fahrzeug (2) beobachten, umfasst.

6. Verfahren nach Anspruch 5, wobei die eine oder die mehreren externen Einheiten mindestens ein zusätzliches autonomes Fahrzeug (2) umfassen.

7. Verfahren nach einem der vorstehenden Ansprüche, wobei die Diagnosedaten mindestens eines angeben von:
- einem oder mehreren ausfallenden Sensoren in einem Satz von Sensoren des autonomen Fahrzeugs (2) und
- einen ausfallenden Geschwindigkeitsmesser und/oder einen ausfallenden Fußgängerdetektor.

8. Verfahren nach einem der vorstehenden Ansprüche, wobei das Bestimmen (202) des Fehlers ein Zuordnen der Diagnosedaten zu einem oder mehreren Fehlern umfasst.

9. Verfahren nach Anspruch 8, wobei das Zuordnen der Diagnosedaten zu einem oder mehreren Fehlern ferner auf mindestens einem basiert von:
- einer vorbestimmten Analyse darüber, wie sich unterschiedliche Ausfälle des Satzes von Sensoren auf den Betrieb des autonomen Fahrzeugs (2) auswirken und
- einer vorbestimmten Analyse darüber, wie sich unterschiedliche Ausfälle des Satzes von Sensoren auf den Betrieb innerhalb des mindestens einen Bereichs (4) und/oder das Durchqueren von diesem auswirken.

10. Verfahren nach einem der vorstehenden Ansprüche, wobei der mindestens eine manuelle Akteur (3) ein beliebiges oder mehrere umfasst von:
mindestens einem gefährdeten Verkehrsteilnehmer, VRU, z. B. mindestens einen Fußgänger und/oder Radfahrer und
mindestens einem Personenkraftwagen.

11. Steuereinheit (70), die konfiguriert ist, um das Verfahren nach einem der Ansprüche 1 bis 10 durchzuführen.

12. Autonomes Fahrzeug (2), umfassend eine Steuereinheit (70) nach Anspruch 11.

13. Computerprogramm (480), umfassend Programmcodemittel zum Durchführen der Schritte nach einem der Ansprüche 1 bis 10, wenn das Programm auf einem Computer ausgeführt wird.

14. Computerprogrammmedium (490), das ein Computerprogramm trägt, umfassend Programmcodemittel zum Durchführen der Schritte nach einem der Ansprüche 1 bis 10, wenn das Programm auf einem Computer ausgeführt wird.

## Revendications

1. Procédé d'assistance au fonctionnement d'un véhicule autonome (2) défaillant dans un environnement de travail (1), dans lequel l'environnement de travail (1) comprend un ensemble de zones (50), dans lequel l'ensemble de zones (50) comprend au moins une zone (4), dans lequel l'au moins une zone (4) comprend une route, et dans lequel au moins un acteur manuel (3) opère dans l'au moins une zone (4) et/ou traverse l'au moins une zone (4), et dans lequel les autres zones de l'ensemble de zones (50), autres que l'au moins une zone (4), sont isolées des acteurs manuels, et dans lequel le véhicule autonome (2) est configuré avec un ensemble d'itinéraires (40) pour se déplacer entre des zones de l'ensemble de zones (50), le procédé comprenant :
- l'obtention (201) de données de diagnostic indiquant un dysfonctionnement dans le véhicule autonome (2),
- en fonction des données de diagnostic, la détermination (202) d'un défaut associé au véhicule autonome (2),
- en fonction de la défaillance déterminée, la décision (203) et le déclenchement (204) d'une action préventive d'un ensemble d'actions préventives pour sécuriser l'au moins une zone (4), l'ensemble d'actions préventives comprenant :
- le déclenchement du véhicule autonome (2) pour l'empêcher de traverser et/ou d'opérer dans l'au moins une zone (4),
- le déclenchement d'une adaptation de l'infrastructure routière (30) dans l'au moins une zone (4), laquelle adaptation induit une restriction de déplacement de l'au moins un acteur manuel (3) dans l'au moins une zone (4), ou
- une combinaison de ceux-ci ;
***caractérisé en ce que***
le déclenchement du véhicule autonome (2) pour l'empêcher de traverser et/ou d'opérer dans l'au moins une zone (4) comprend le réacheminement du véhicule autonome (2) de telle sorte qu'il doive parcourir une distance plus longue pour effectuer des opérations en utilisant d'autres itinéraires de l'ensemble d'itinéraires (40) pour effectuer les opérations sans traverser l'au moins une zone (4), et
le déclenchement de l'adaptation de l'infrastructure routière (30) comprend la fermeture d'un élément de restriction, tel qu'une clôture et/ou une barrière, pour empêcher l'acteur manuel (3) d'entrer dans ou de sortir de l'au moins une zone (4)).

2. Procédé selon l'une quelconque des revendications précédentes, dans lequel la décision (203) de l'action préventive comprend la décision de déclencher l'adaptation de l'infrastructure routière (30) dans l'au moins une zone (4).

3. Procédé selon l'une quelconque des revendications précédentes, dans lequel le déclenchement du véhicule autonome (2) pour l'empêcher de traverser et/ou d'opérer dans l'au moins une zone (4) comprend en outre l'empêchement de réaliser au moins une opération, dans lequel l'au moins une opération nécessite la traversée et/ou l'opération dans l'au moins une zone (4), et/ou dans lequel le déclenchement de l'adaptation de l'infrastructure routière (30) comprend l'un ou plusieurs éléments quelconques parmi le réglage de feux de circulation et/ou de panneaux de signalisation de l'au moins une zone (4) de telle sorte que l'au moins un acteur manuel (3) soit empêché de traverser une route lorsque le véhicule autonome (2) opère dans l'au moins une zone (4) et/ou traverse celle-ci, et/ou l'émission d'un signal d'alerte de telle sorte que l'au moins un acteur manuel (3) soit alerté du fait que le véhicule autonome (2) doit opérer dans l'au moins une zone (4) et/ou traverser celle-ci.

4. Procédé selon la revendication 3, dans lequel le signal d'alerte comprend un ou plusieurs éléments quelconques parmi :
- un signal d'alerte sonore, - un signal d'alerte lumineux, et - un affichage d'un message d'avertissement sur un dispositif d'affichage dans l'au moins une zone (4).

5. Procédé selon l'une quelconque des revendications précédentes, dans lequel l'obtention (201) des données de diagnostic comprend en outre la réception des données de diagnostic en provenance du véhicule autonome (2) et/ou en provenance d'une ou de plusieurs entités externes observant le véhicule autonome (2).

6. Procédé selon la revendication 5, dans lequel la ou les entités externes comprennent au moins un véhicule autonome (2) supplémentaire.

7. Procédé selon l'une quelconque des revendications précédentes, dans lequel les données de diagnostic indiquent au moins l'un parmi :
- un ou plusieurs capteurs défaillants dans un ensemble de capteurs du véhicule autonome (2), et
- un indicateur de vitesse défaillant et/ou un détecteur de piéton défaillant.

8. Procédé selon l'une quelconque des revendications précédentes, dans lequel la détermination (202) de la défaillance comprend la mise en correspondance des données de diagnostic avec une ou plusieurs défaillances.

9. Procédé selon la revendication 8, dans lequel la mise en correspondance des données de diagnostic avec une ou plusieurs défaillances est en outre fonction d'au moins l'une parmi :
- une analyse prédéterminée de la manière dont différentes défaillances de l'ensemble de capteurs affectent des opérations du véhicule autonome (2), et
- une analyse prédéterminée de la manière dont différentes défaillances de l'ensemble de capteurs affectent des opérations à l'intérieur de l'au moins une zone (4) et/ou lors de la traversée de celle-ci.

10. Procédé selon l'une quelconque des revendications précédentes, dans lequel l'au moins un acteur manuel (3) comprend un ou plusieurs quelconques parmi :
au moins un usager vulnérable de la route, VRU, par exemple au moins un piéton et/ou des cyclistes, et
au moins un véhicule de tourisme.

11. Unité de commande (70) configurée pour réaliser le procédé selon l'une quelconque des revendications 1 à 10.

12. Véhicule autonome (2) comprenant une unité de commande (70) selon la revendication 11.

13. Programme informatique (480) comprenant des moyens de code de programme pour réaliser les étapes selon l'une quelconque des revendications 1 à 10 lorsque ledit programme est exécuté sur un ordinateur.

14. Support de programme informatique (490) contenant un programme informatique comprenant un moyen de code de programme pour la réalisation des étapes selon l'une quelconque des revendications 1 à 10 lorsque ledit programme est exécuté sur un ordinateur.
